(19) Europäisches Patentamt
European Patent Office
Office européen des brevets

(11) **EP 2 020 566 A2**

(12) **EUROPEAN PATENT APPLICATION**

(43) Date of publication:
**04.02.2009 Bulletin 2009/06**

(51) Int Cl.:
*F21V 13/04* (2006.01)  *G09F 13/04* (2006.01)
*G09F 13/14* (2006.01)  *F21Y 101/02* (2006.01)

(21) Application number: **08153266.5**

(22) Date of filing: **26.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.07.2007 IT GE20070073**

(71) Applicant: **Gai, Giorgio**
**16167 Genova (IT)**

(72) Inventor: **Gai, Giorgio**
**16167 Genova (IT)**

(74) Representative: **Karaghiosoff, Giorgio Alessandro**
**Studio Karaghiosoff e Frizzi S.r.l.**
**Via F. Baracca 1R 4° piano**
**17100 Savona (IT)**

(54) **Radiating element for light panels and light panel manufactured using said radiating element**

(57) A basic radiating element (1) for light panels is composed of a half-shell shaped plate (2) with a polygonal or round plan shape and with a concave reflection/scattering side (202) facing towards an emitting surface and a convex side opposite said emitting surface, the central area of the shell having an opening for receiving a light source (5) which has the radiating head within the depression of the concave side (202) and at a focal point of said concave surface, so that the light radiation emitted from the emitting head of the light source (5) in the sideward, i.e. radial direction, relative to the central axis of symmetry of the reflection/scattering means, is reflected/scattered in a predetermined percentage in a direction incident upon an emitting surface oriented along a plane transverse, preferably perpendicular to the central axis of symmetry of the reflection/scattering means.

Fig. 1

**Description**

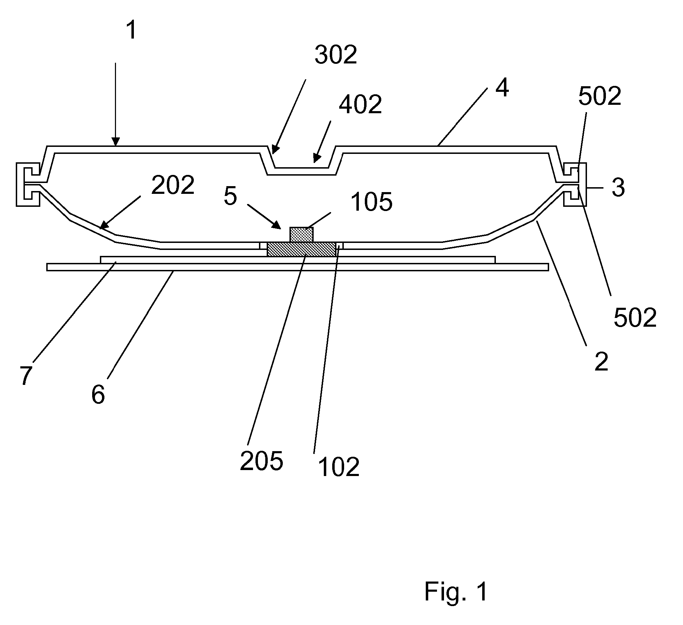

The invention relates to a radiating element for light panels, which radiating element is in tessera or tile form, with one of its faces forming the light radiation-emitting surface, which light radiation is emitted with an approximately even and constant distribution over said emitting surface, whereas said radiating element comprises a light source for sideward light generation, relative to the direction perpendicular or approximately perpendicular to the emitting surface, and with a 360° angular range about said source and the central axis perpendicular to the emitting surface as well as with a predetermined opening angle for emission of a peak radiation intensity, particularly a so-called radial emission generated, for example, by a so-called radial LED, which light source is held within the tessera or tile in a median position relative to the light radiation emission surface and in an intermediate position relative to the tessera or tile element and which tessera or tile element has means for reflection/scattering the radial light radiation in a direction incident upon the emission surface. Fig. 1.

Light-emitting elements adapted to emit light radiation from a surface and with a substantially constant intensity distribution over said surface are used as light sources in the manufacture of light panels. The latter generally consist of a thin box-like member, with one or two translucent interiorly backlit surfaces. These translucent surfaces have transparent films or paper sheets laid thereon, with a picture or message to be publicly displayed. These light panels are widely used in the fields of advertising, interior and exterior lighting, road and highway signs and in other fields.

Various light-emitting elements for light panels are known in the art:

Light panels with fluorescent or neon tubes in which the tubes are placed behind the panel emitting-surface and illuminate the front of the panel emitting-surface.

Light panels with a plate-like scattering element in which the light radiation sources illuminate the scattering element from one or more delimiting sides of the scattering element and scattering occurs in the direction of the front surface of said scattering element, which becomes the light radiation-emitting surface. Here, the light sources may be fluorescent tubes, incandescent lamps and LEDs.

Light panels with front LEDs, in which LEDs emit light radiation from an emitting head directed towards the user, i.e. perpendicular or approximately perpendicular to the emitting surface. In this case, the LEDs are oriented to the front and lie on the bottom of the panel, each forming a unit point of minimum size, i.e. some sort of pixel, of a luminous picture composed of a number of said LEDs.

All the above systems can provide light panels, but all the above systems suffer from drawbacks deriving from their complex construction, inadequately homogeneous light intensity along the emitting surface, short life and difficult manufacture using industrial processes.

The radiating light-emitting element described initially, i.e. as defined by the preamble of claim 1, also suffers from considerable drawbacks, mainly in that it is always comparatively expensive, has a complex construction and does not optimize scattering of the light intensity radiated towards the emitting surface.

Therefore, the invention is based on the problem of providing a light-emitting radiating element for light panels, that has a simple and inexpensive construction and a smaller weight, requires less maintenance and whose maintenance is simpler and less time-consuming, while at least preserving, and possibly improving performance in terms of light emitted from the emitting surface.

The invention fulfills the above purpose by providing a radiating element for light panels as described hereinbefore, and wherein the reflection/scattering means form the tessera or tile element and are formed of a half-shell shaped plate with a polygonal plan shape and with a concave reflection/scattering side facing towards the emitting surface and a convex side opposite said emitting surface, the central area of the shell having an opening for receiving the light source which has the radiating head within the depression of the concave side and at a focal point of said concave surface, so that the light radiation emitted from the emitting head of the light source in the sideward, i.e. radial direction, relative to the central axis of symmetry of the reflection/scattering means, is reflected/scattered in a predetermined percentage in a direction incident upon an emitting surface oriented along a plane transverse, preferably perpendicular to the central axis of symmetry of the reflection/scattering means.

The convex surface may be of reflective, mirror-like type or of scattering, i.e. white type.

The half shell element that forms the tile or tessera may have any plan shape, e.g. a square or triangular shape or other regular or irregular polygonal shapes.

Advantageously, the front concave surface facing towards the emitting side of the half-shell plate and/or the rear convex surface have a paraboloidal curvature.

The plate or sheet that forms the reflection/scattering means due to its concave shape, is advantageously, but without limitation, made of a plastic material, preferably a heat deformable plastic material.

The plate of which the reflection/scattering means are made may be relatively thin, with typical thicknesses for vacuum and hot forming (i.e. thermoforming) processes. These processes are known and widely used, for example in the fabrication of food-grade plastic containers or shaped, expanded fruit trays.

Concerning the light source, this advantageously consists of a radial or edge-emitting LED with 360° light pattern as described above in greater detail.

According to a further improvement, the concave side of the half-shell reflection/scattering means is closed by a transparent or translucent element with coupling means for connecting the peripheral edge of said closing element to the peripheral edge of the reflection/scattering means.

Preferably, the transparent closing element has the same plan shape as the reflection/scattering means and is at least approximately congruent with the plan shape of these means.

These mutual peripheral fastening means, with either continuous or discontinuous extensions, may be coupling means engaging with complementarily shaped end portions of the peripheral edge of both the reflection/scattering means and the closing element, such as clips or the like that are designed to engage with folded peripheral edges or peripheral edge segments that form peripheral coupling grooves along the peripheral edges of the reflection/scattering means and the closing element and are open at respective opposed sides.

Advantageously, the covering element or closing element has a surface area with lower transmission coefficient, i.e. lower transparence, in a central portion coincident or coaxial with the light source head, as compared with the remaining peripheral portion, which surface area attenuates the intensity of the light radiation emitted at the light source head, at least approximately to the same level as the intensity of the light radiation emitted through the surface area of the transparent closing element with higher transmission coefficient, i.e. surrounding such central portion. Thus, in addition to the advantage of closing the light source compartment to the external atmosphere and of providing a tessera or tile that is externally closed and has a very low weight and very low material, fabrication and assembly costs, the light intensity is radiated through said closing surface with optimized homogeneity, whereby the emitted light radiation is substantially constant throughout the emitting surface, i.e. the surface of the closing element.

According to an advantageous embodiment, this central surface portion with the lower light transmission coefficient is a depressed central portion, i.e. a central depression of the surface of the closing element and the bottom of this depression undergoes a treatment for reducing the transmission coefficient.

The closing element is also advantageously formed by vacuum and hot forming processes from a thin plate of transparent plastic material, as mentioned concerning the reflection/scattering means.

According to yet another characteristic, the light source, i.e. the radial or edge-emitting LED is directly mounted to the header of a printed circuit board, typically made of glass epoxy, which header also bears the tracks of the printed circuit board that forms the power supply circuit for said source and possibly some of the circuit components of a power supply or power regulation circuit for said source, the light source being provided on one side of said header and said header being fixed or fixable to half-shell reflection/scattering means whereas, in the mounted condition, said header extends tangent to the convex side of the reflection/scattering means in the area of the central light source receptacle and said light source projects cantilever-wise out of the concave side of the reflection/scattering means in the focus of the paraboloid.

According to yet another advantageous characteristic of the invention, the LED is attached to a metal plate, preferably made of aluminum, allowing heat dissipation and fixation of the light-emitting radiating element to a load bearing structure, which aluminum plate is placed tangent or parallel to a position tangent to the convex side of the reflection/scattering means in the area of the central light source receptacle, and said light source projects cantilever-wise out of the concave side of the reflection/scattering means in the area of the focus of the paraboloid, whereas said reflection/scattering means are or can be attached to said metal plate.

Here, the header/s of the printed circuit board of a power supply circuit or a power regulating circuit for said light source are also mounted to said metal plate, e.g. in a slightly offset position, in the area peripherally surrounding the light source, and in which the convex side of the reflection/scattering means are spaced from the metal plate.

The metal plate is substantially coaxial or concentric with the plan shape of the reflection/scattering means and does not project out of the peripheral sides of said means.

The size of the radiation element depends on the type of light source, particularly LED, being used and on the light intensity to be obtained through the emitting surface, with the side or diameter ranging from 5 cm to 30 cm.

In one alternative embodiment, the reflection/scattering means are formed of a thin metal sheet, such as aluminum sheet or the like, one of whose sides, i.e. the one designed to form the concave side, is treated to become reflective, coated with a layer of material providing a scattering effect, e.g. with white paint, and which sheet is shaped by molding.

In accordance with an additional variant construction of the invention, two or more radiating elements as described above are integrated in one element, the half-shell reflection/scattering means for two or more light sources being formed from a single sheet of material that is shaped to form two or more half-shells in side-by-side relationship on one or more sides.

Each of the reflection/scattering means integrated in the multiple radiation element is formed according to one or more of the features as described above with reference to the single radiating element.

Here, a corresponding multiple closing element is provided, composed of an array of side-by-side single closing elements, each having a central portion with a lower light transmission coefficient, coincident with the light source of the corresponding reflection/scattering means of the array of said means in the multiple radiating element.

The multiple closing element also can have one or more of the features as described above with reference to the closing element of the single radiating element.

Concerning the means for fixing the multiple covering element to the corresponding array of reflection/scattering means, the fixation means may be substantially identical to those of the single radiating element, and are located at least along the coincident peripheral edges of the multiple closing element and the array of reflection/scattering means.

According to yet another characteristic of the invention, an array of single or multiple radiating elements is provided, in such combination as to cover various shapes and sizes of the surfaces to be illuminated and particularly an array of radiating elements is provided that has one or more single radiating elements, one or more double radiating elements, one or more triple radiating elements, one or more quadruple radiating elements, and one or more sextuple radiating elements, or a combination of such single or multiple radiating elements.

Here, the single radiating elements advantageously have a square plan shape.

The multiple radiating element advantageously improves the efficiency of the construction, to further reduce costs, weight, as well as construction and assembly complexity.

Particularly, according to a first characteristic, the light sources may be mounted to a common metal support sheet or the like, each being located coincident with the receptacle of the corresponding reflection/scattering means and printed board circuits may be provided that are formed of an element shared by two or more light sources.

The combination of single radiating elements into multiple radiating elements provides various advantages, namely:

- easier and less costly assembly of the radiating elements in the light panel;
- easier and less costly power supply to the light sources. Particularly, a combination of six single radiating elements having six 2 Watt LEDs allows the sextuple radiating elements to be powered by a 24 Volt direct current source and, by particular arrangements, the other single or multiple elements can be also powered with a predetermined reference voltage.
- less costly assembly of the multiple radiating elements and better storage conditions before assembly into a light panel.

According to yet another characteristic of the invention, the transparent covering element may have stiffening ribs arranged in a predetermined pattern over the surface of said covering element.

Also, according to a further characteristic, the multiple covering element has a plurality of projecting spacers for a transparent or translucent plate of a light panel, which is illuminated by a multiple radiating element of the above type.

The spacer elements are optional and their provision depends on the width dimension of the plate, which can be very large, and possibly cause buckling of the plate under its own weight.

These projections may be other than the ribs or at least partly formed of the above stiffening ribs.

The invention also relates to a light panel having at least one bearing frame for supporting a plurality of light emitting means mounted to the back of at least one translucent or transparent plate, which bears or supports graphical information formed by a combination of transparent and/or translucent surfaces having different colors and/or light transmission coefficients, the light emitting means including, according to the present invention, one or more single or multiple radiating elements as described above.

The invention relates to further characteristics which form the subject of the dependent claims.

The characteristics of the invention and the advantages deriving therefrom will appear more clearly from the following description of a few non-limiting embodiments which are illustrated in the accompanying drawings, in which:

Fig. 1 is a cross sectional view of a first embodiment of a single radiating element of the present invention.
Fig. 2 is a cross sectional view of a light panel comprising a plurality of radiating elements of Figure 1.
Figure 3 shows a covering element for a multiple radiating element.
Figs. 4A to 4D show different schematic configurations of multiple radiating elements composed of two, three, four and six single radiating elements having a square plan shape respectively.
Fig. 5 is a top plan view of the array of sextuple radiating element acting as light emitting means of a large light panel.
Figures 6A and 6B show two multiple radiating elements composed of four and eight single triangular radiating elements respectively.
Figures 7 to 9 show a single radiating element according to three different variant embodiments, differentiated in that they have no annular lens associated to the light source, or an annular lens with a frustoconical section or an annular square lens with a square section respectively.
Figures 10 to 12 and 13A to 13B are various views i.e., respectively, a cross sectional view as taken along line A of Figure 11, a top plan view and a lateral long-side view and a perspective view in the assembled and exploded conditions respectively, of a multiple radiating element composed of six single radiating elements having a square plan shape arranged on two side-by-side rows of three single radiating elements each.
Figure 14 shows an enlarged, partially sectional detail of the light source-associated portion of the radiating element.

Figure 15 shows an alternative embodiment of a multiple radiating element and/or a light panel having light sources capable of side or radial light radiation emission over a 360° range.

Fig. 16 is a plan view of an exemplary light panel composed of elements having 6, 3, 2 and 1 base radiating elements.

Referring to Figure 1, a single radiating element 1 for illuminating light panels is composed of half-shell reflection/scattering means 2 having at least one concave front surface 202. The half-shell may have any shape whatever, such as a circular, square, triangular shape or a polygonal shape with a greater number of angles, the polygonal shapes being preferably, but without limitation, regular and equilateral.

The concave side 202 of the half-shell is rotationally symmetrical with respect to the central axis perpendicular to the plan shape of the half-shell and curvature front side 202 of the half-shell is of paraboloidal shape, which is rotationally symmetrical with respect to the same central perpendicular axis of rotational symmetry of the plan shape of the half-shell.

The front side has such a curvature has to form a reflection/scattering surface to reflect/scatter the light radiation coming in a direction radial to the central axis of symmetry of the half-shell and hence of the concave front side 202, so that the light rays having said radial direction and an inclination within a predetermined opening angle about the radial axis associated with said central axis of symmetry - which might be defined as an opening in the azimuth direction - are reflected/scattered in a direction incident upon a plane oriented transverse, preferably perpendicular to the axis of symmetry of the half-shell and the front side 202 thereof.

The half-shell has a central receptacle 102 at its central portion, which is coaxial with the central axis of symmetry of the concave side 202, for receiving the socket 205 of a light source 5, whose light radiation emitting head 105 projects into the space defined by the concave front side 202. The light source 5 is an edge-emitting source operating over a 360° range, i.e. a light source that emits light radiation with an intensity distribution in which intensity is higher or concentrated in a direction radial to a central axis oriented in a desired light radiation emitting direction, with a predetermined opening in the plane containing said axis and with an angular extension corresponding to a round angle, i.e. 360°. In the present Figure 1, light radiation is emitted at the head 105, said light radiation distribution being coaxial with the central axis of symmetry of the reflection/scattering means and particularly of the concave surface 202.

According to a particular construction characteristic of the embodiment as shown in Figure 1, the reflection/scattering means are formed of a thin sheet that is shaped to have a concave shape on the front face 202 and a corresponding convex shape on the opposite face. The face, i.e. the concave front side 202, undergoes such a treatment as to reach a desired reflection/scattering coefficient, which can occur in various manners, e.g. through the application of a reflective white paint and/or buffing or other means.

Advantageously, the plate that forms the reflection/scattering means 2 is made of thermoformable plastic material and preferably has such a thickness as to allow shaping by a simple vacuum and hot forming process, also known as thermoforming. Such forming process is known to be used, for example, with food-grade packaging containers or the else, expanded fruit trays or the like.

Otherwise, the plate that forms the reflection/scattering means 2 is made of metal, such as aluminum. In this case, thickness is selected in view of allowing the plate to be shaped by molding, and ensuring that the half-shell has some structural stability.

Composite material plates can be obviously used, such as multilayer plates having such composition as to afford structural stability, formability and low weight and cost.

The reflection/scattering means 2 provided by the concavo/convex half-shell have the concave side closed by a covering element 4 of transparent material which forms the light radiation emitting surface, the light radiation emitted by the source 5 radial to the central axis of symmetry being deflected by the concave surface 202 in a direction incident upon said covering element. The covering element 4 is made of transparent and/or translucent material and particularly of transparent or translucent plastic material. As mentioned above with reference to the reflection/scattering means 2, the covering element is formed of a thin thermoformable plate.

The covering element 4 can be fixed to the half-shell acting as reflection/scattering means to form a box-like radiating element containing the emission head of the light source 5 in a predetermined position relative to the concave surface 202 of the half-shell. Particularly, said covering element has a plan shape substantially identical to the plan shape of the half-shell acting as reflection/scattering means and is at least approximately congruent therewith. The closing or covering element 4 and the half-shell that acts as reflection/scattering means 2 are mutually fixed along the peripheral edges of said two parts that have matching peripheral mutual fixation flanges 502.

Such fixation can occur either continuously or discontinuously all along the flanges, by chemical/physical bonding, such as welding, gluing or the like or using detachable fastening means, such as interlocking means, or mutual clamping means, such as screws and bolts or possibly by clipping.

In the latter exemplary embodiment as shown in Figure 1, the peripheral flanges 502 of the half-shell acting as reflection/scattering means 2 and the covering element are formed with a peripheral channel- or groove-like section and are open on opposite sides, thereby forming two opposite coupling grooves for C-shaped clips 3. These clips may be discontinuous elements arranged along the peripheral extension of the two parts to be fixed or a C-shaped continuous band may be provided.

In both variants, the clips may be either elastically deformed for snap engagement with the flanges 502 or the clips may be inelastically deformed and then applied by shaping them around the flanges 502 to clamp them together.

Still concerning the closing or covering element 4, this element has a central portion, i.e. a portion coincident and/or possibly coaxial with the emitting head 105 of the light source 5, which portion 402 is formed with a lower light radiation transmission coefficient as compared with the rest of the covering element 4. This arrangement has the purpose of attenuating a light radiation intensity peak towards the central axis of symmetry and generates nonhomogeneous distribution of the light intensity radiated from the surface of the covering or closing element 4.

According to this embodiment, this portion treated for radiation intensity attenuation is a central depression 302 concentric and possibly coaxial with the head 105 of the light source 5, whose bottom 402 and/or possibly the lateral parts of which depression 302 are treated as described above.

The light source 5 is supported by a base plate. Such plate may be the header of the printed circuit board that forms the power supply circuit and/or the power regulation circuit or at least part of said power supply and/or power regulation circuits of the light source 5, wherefore such header also bears, in this case, at least some of the circuit components. The header may be further supported by a base plate that also acts as a heat sink.

The plate may also be a cooling plate, such as a plate made of metal, aluminum or any other material with a high heat transmission coefficient, which plate has the function of dissipating the heat generated by the light source and which plate may in turn have, alongside the light source 5, one or more printed circuit board headers for the power supply and/or power regulation devices or for part of said devices or circuits.

Figure 1 shows the above solution, the source 5 and the header 7 of the power supply or power regulation circuit or part of said circuits being supported by a heat dissipation plate 6.

The heat dissipation plate 6 and/or the header also support the reflection/scattering means 2 and the covering element 4 that are or can be fixed, preferably in a detachable manner, to the source 5 and/or the header 7 and/or the heat dissipation plate 6.

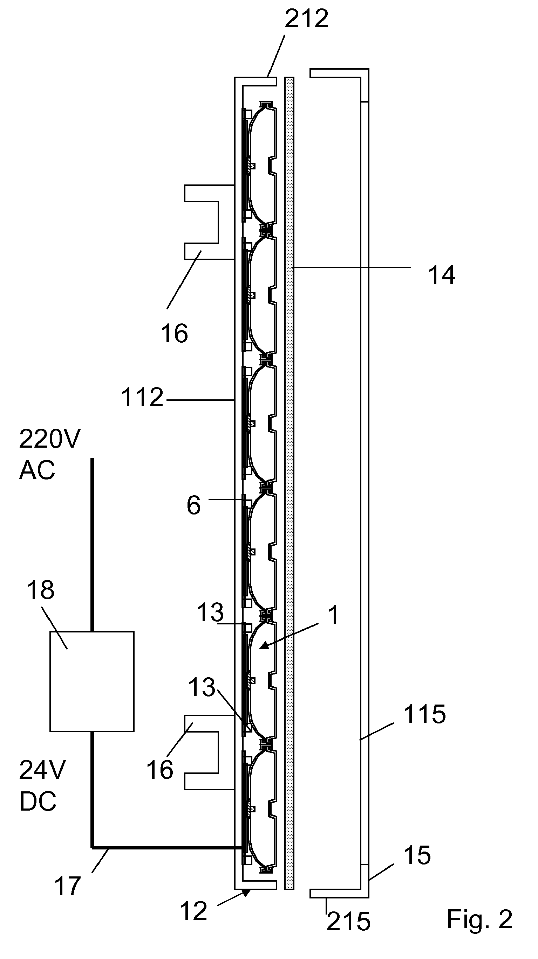

Depending on the construction variant selected from the two above options, the header 7 and/or the heat dissipation plate 6 also act as a socket for connection of the single radiating element 1 to a bearing structure of a device in which such radiating element 1 is used or located, like the light panel of Figure 2 as described in greater detail below.

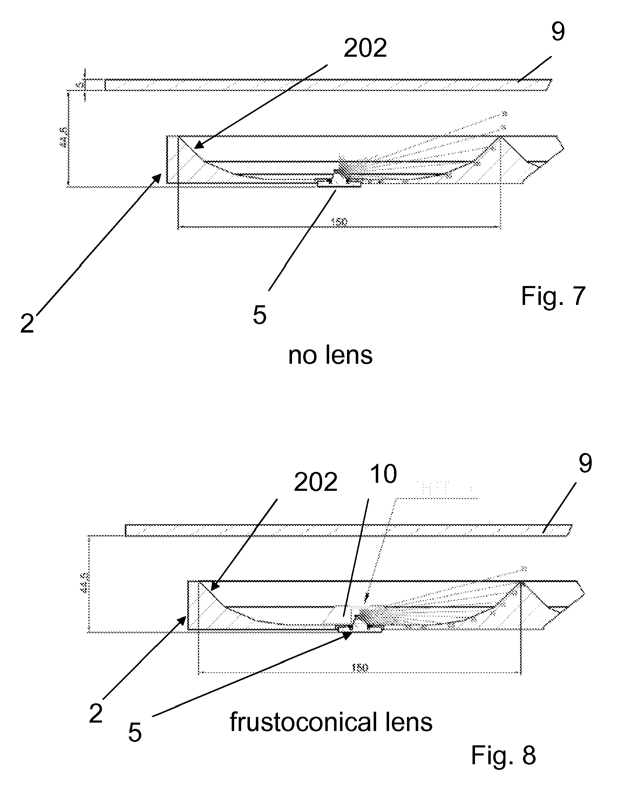

Referring to Figures 7 to 9, a variant embodiment is shown in which the reflection/scattering means 2 are not formed as a half-shell with a relatively thin wall and hence with a concavo-convex shape, but as a plate having one concave depression on one side, acting as a reflection/scattering surface 202.

The figures also show, on the right side, the intensity distribution pattern of the radiation emitted by the light source in various conditions and variants, as described in greater detail below.

In Figure 7, the light source has no concentration lens and the opening angle of radiation in the radial direction causes part of the radiation to fall out of the concave, paraboidal reflection/scattering surface 202 and be lost and excluded from the overall radiation intensity emitted through the emitting surface, i.e. the covering element or the element or surface to be backlit, designated by numeral 9 in Figures 7 to 9.

In Figure 8, the light source is provided in combination with an annular lens 10 having a right trapezoidal cross section, and a frustoconical cross section along the external long diameter. The light source head 105 is held within the central hole of the annular lens 10. This arrangement reduces the opening angle of radiation in the radial direction, thereby focusing a higher light intensity on the reflection/scattering surface 202.

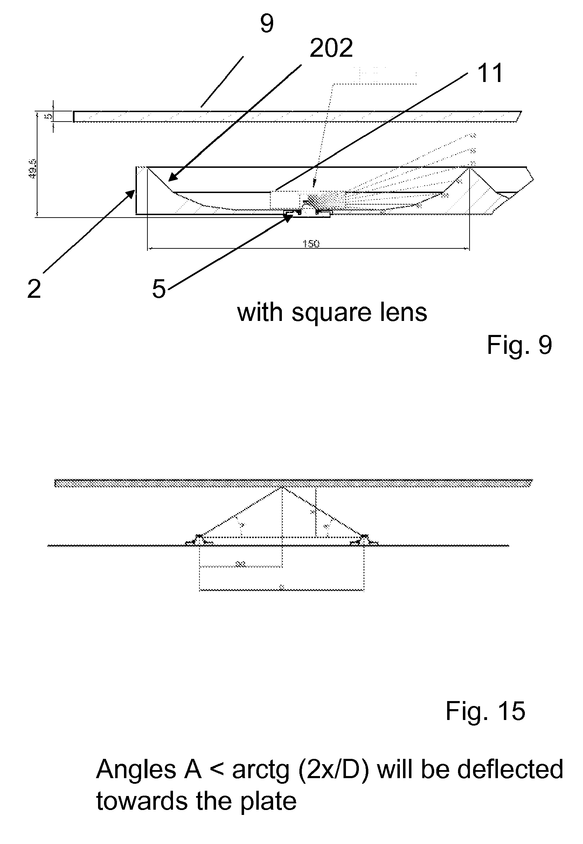

The same effect is obtained using an annular lens of rectangular or square cross section, as shown in Figure 9 and designated by numeral 11. As can be seen from the values on the axes, the solution of Figure 9 with the lens of square or rectangular cross section is an intermediate solution allowing recovery of a small part of the radiation emitted by the light source in the upper margin area of the opening cone, whereas the solution of Figure 8 with the frustoconical lens 10 allows recovery of a considerable amount of radiation, by deflecting it onto the concave surface 202, and focuses the radially emitted radiation into an opening cone of smaller angular width, i.e. a smaller opening angle.

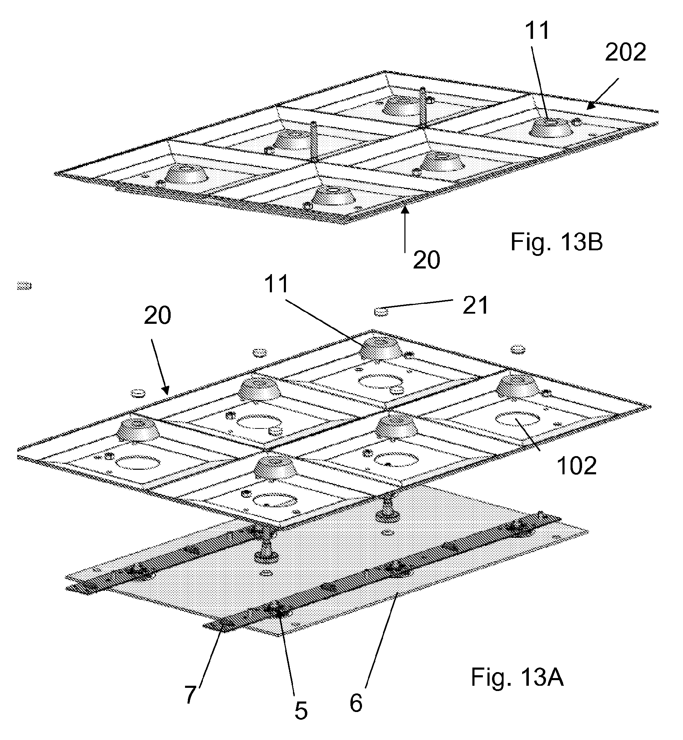

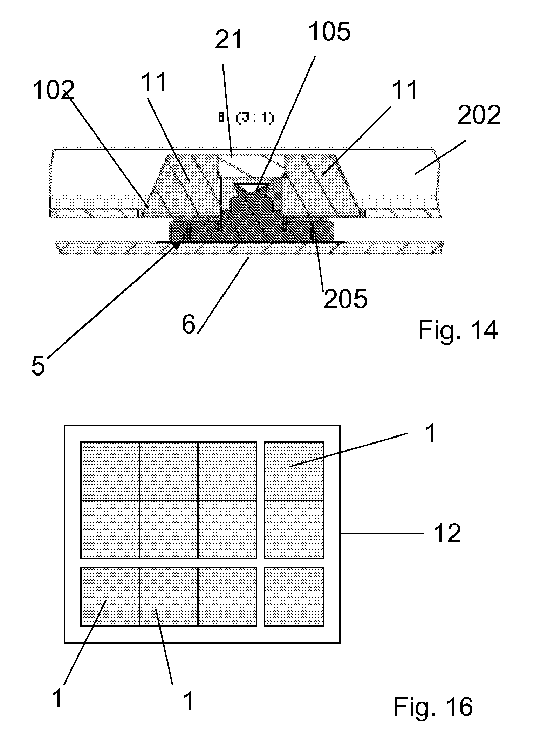

It can be noted, with reference to Figure 13A, that the annular lenses 10, irrespective of their shape, are separate parts designed to be coaxially fixed to the light source 5, i.e. to the part of the latter from which the light radiation is emitted, which is designated by numeral 105 in Figure 14. Particularly, these parts are detachably fixed, such as by interlocking arrangements or other known detachable mechanical fixation, and the annular lens 10 is especially fixed against the reflective surface 202 all around the through hole for the radiating head 105 of the light source 5.

According to another characteristic, the side of the annular lens 10 that is designed to contact, be fixed or at least face towards the area of the reflective surface all around the through hole for the light source 5 may be treated to become reflective. Particularly, such side of the annular lens 10 is covered with a white adhesive film and/or subjected to pad printing or coated with a layer of white paint. Obviously, said surface of the annular lens 10 may undergo any alternative treatment for providing said white surface on the side facing towards the inside of the lens.

Referring to Figure 2, the single radiating element 1 may be used for manufacturing light panels, i.e. panels in which a message, an image or else are emphasized by backlighting. Here, the panel may have various constructions and the light-emitting radiating element 1 may be used in combination with various construction features.

A very simple light panel embodiment is shown in Figure 1. In this case, the panel frame has a box shape and is composed of a rear container or tray 12 having a bottom wall 112 and side walls 212. A plurality of radiating elements 1 of the present invention are accommodated in this container or tray in side-by-side relationship, in both height and width directions of the tray, and are fixed in position using detachable fastener elements 13, such as screws, bolts, or other means, such as interlocking of their plates 6 or 7 to the bottom side 112 of said container or tray 12 and with the concave side 202 of the reflection/scattering means 2 and the covering element 4 facing towards the open side of said container or tray 12. (FIG. 1 and FIG. 2).

The plan size of the tray or container 12, i.e. the plan size of the surface to be illuminated and the plan shape are exact multiples of the size of the radiating element 1. The front side of the light panel is equipped with a plate of transparent or translucent material 14, in direct contact with the front side, i.e. the covering elements of the array of radiating elements 1, or somewhat spaced therefrom by means of spacer elements. The plate 14 bears a communication message drawn directly thereon or on a support separate from the plate 14. A cover 15 with a window 115 closes the front of the light panel to overlie a peripheral strip of the plate 14 in a frame-like fashion, and possibly has side walls 215 overlying the side walls 212 of the tray or container part 12.

The tray or container part 12 has elements 16 at its back for fixation to a support, such as a wall, a post or other means. Furthermore, the container or tray 12 has a tight opening for receiving power leads 17. These leads may be connected to any power source, power being transformed by a power supply unit 18. The latter may be located wholly or partly outside or inside the panel.

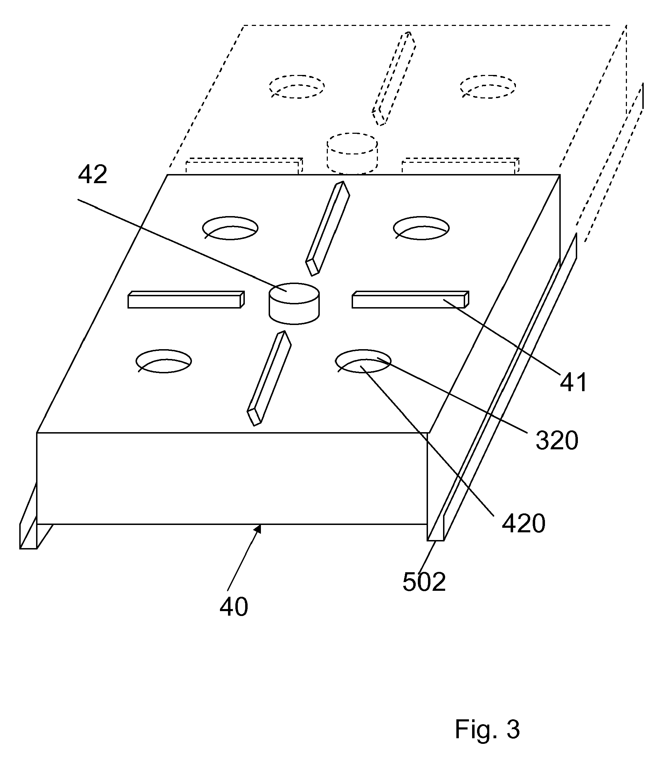

Figures 3 to 14 show an improved construction, providing integration of two or more single radiating elements, i.e. radiating elements having each at least one light source, in a multiple radiating element, i.e. a double, triple, quadruple or sextuple element. An array of such multiple radiating elements may be also provided, to cover various areas of light panels, possibly having different plan shapes.

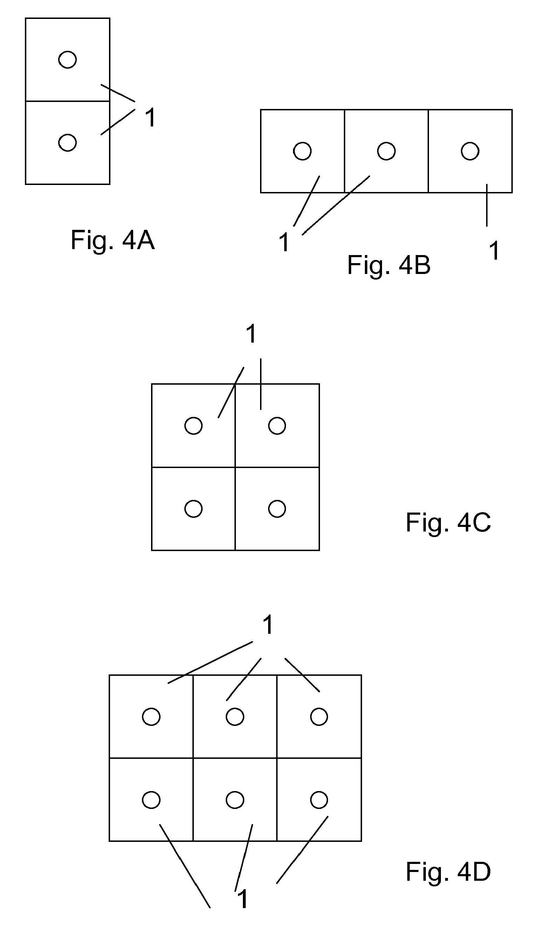

Figures 4A to 4D show multiple panels composed of two, three, four, five and six single radiating elements having a square plan shape.

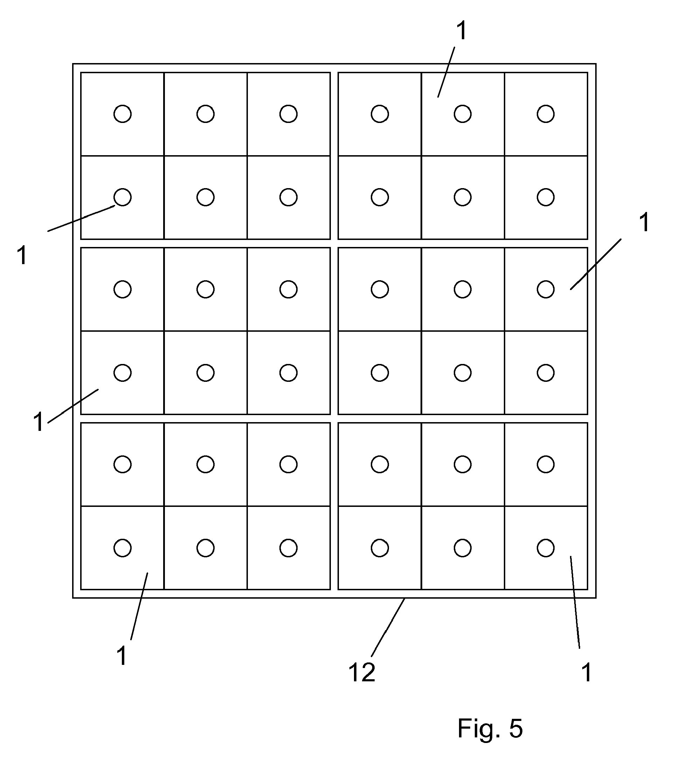

Figure 5 shows a plan shape of an exemplary light panel in which the translucent plate 14 is illuminated by a plurality of multiple radiating elements, each composed of six single radiating elements 1. The figure shows the tray or container 12 in which six multiple radiating elements are accommodated.

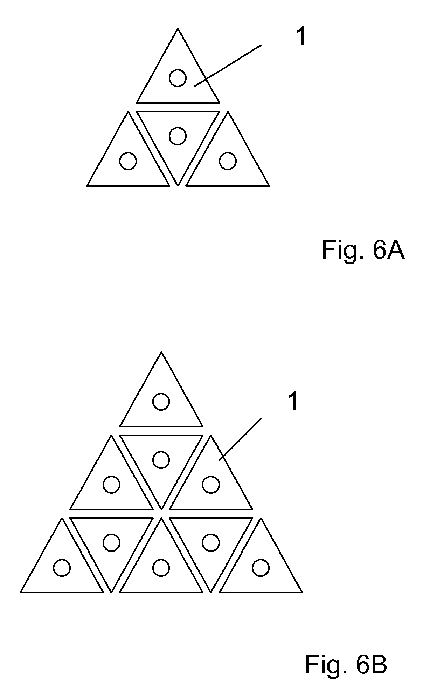

Figures 6A and 6B show multiple radiating elements composed of a plurality of single triangular radiating elements, which are combined together to form larger triangular emitting surfaces. The figures are intended to be schematic do not provide construction details.

Arrays may be further provided with single and multiple radiating elements having different plan shapes. For instance, such arrays of single and multiple radiating elements may include single radiating elements of isosceles triangular and square plan shapes, each triangular radiating element being identical to the diagonal half of the square element, whereas the multiple radiating elements are composed of one or more single square radiating elements and one or more single triangular radiating elements or combinations of one or more of said square and triangular radiating elements.

Figures 3 and 10 to 14 show in greater detail a construction embodiment of the reflection/scattering means for a multiple radiating element integrating six single radiating elements.

The reflection/scattering means designated by numeral 20 are formed of a half-shell which is shaped to include six depressions in side-by-side relationship in one or both directions of extension of such half-shell, each of which forms the convex side 202 of one reflection/scattering means 2 for a single radiating element. Advantageously, the reflection/scattering means 20 of the multiple radiating element are also formed as a relatively thin plate made of plastic or another material as described above concerning the single radiating elements of Figure 1. The convex surface 202 also has all the characteristics indicated therefor in the description of the single radiating element and, since the latter is a square radiating element, its concave paraboidal surface is formed of four wedges joined together along the diagonals of the square plan shape.

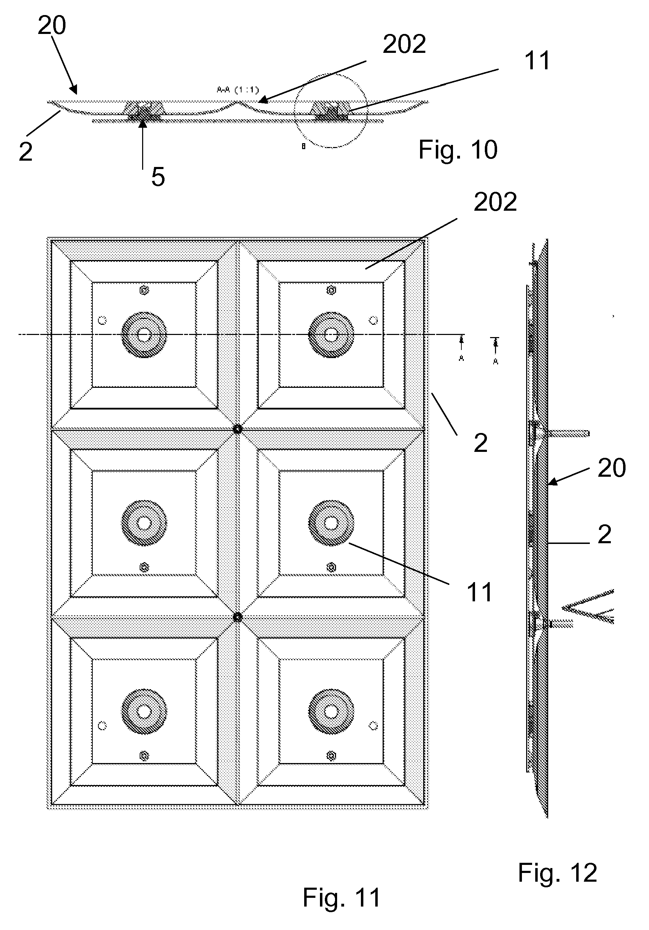

Therefore, the plate has a single-piece construction, whereas the central portion, coaxial with the central axis of the plan shape (still as described above for the single radiating element), includes the receptacle of the light source 5 which is also of the radial or edge-emitting type, relative to the central axis of symmetry. In the variant of Figures 10 to 14, an annular lens of frustoconical section 11 as described with reference to Figure 8 is provided around the emitting head 105 of each of the light sources. Nonetheless, such lens can be also omitted, as mentioned above concerning the single radiating element.

Still with reference to Figures 10 to 14, as particularly shown from Figure 13B, the construction of the multiple radiating element 20, which integrates in this case six single radiating elements, but may be provided in other patterns with more or less than six elements, also allows one-piece construction of the metal heat dissipation plate designated by numeral 6 and provides improved efficiency, with one header 7 having the power supply circuits or parts thereof for two or more LEDs or all the LEDs of the multiple radiating element.

In this example, the header 7 is formed as an elongate element having such an extension as to overlie three receptacles 102 of the three light sources 5 of three adjacent single radiating elements aligned along a longitudinal direction of the multiple radiating element. Particularly, as shown in Figure 14, each LED adheres to the heat dissipation plate 6 by its base 205, whereas the header 7 has a through hole coincident with the emitting head 105 of the LED and with the receptacle 102 in the corresponding reflection/scattering means through which hole the emitting head 105 projects from the side of the header 7 opposite the one facing towards the heat dissipating plate 6. Thus, the base 205 of the LED 5 is interposed between the header 7 and the plate 6.

During assembly, the LEDs are mounted to the header 7 by connecting the LED contacts to the corresponding tracks and, in the position as shown in Figure 14, in which the socket 205 adheres to the rear side of the header (considering the direction of illumination of the radiating element) and the emitting head 105 projects out of the front side of the header 7. The assembly of the header 7 and the three LEDs 5 is formed separately as a construction unit to be later mounted to the heat dissipation plate 6 with the multiple reflection/scattering means 20 being associated therewith by fitting the heads of the LEDs 5 in the apertures 102 of the concave portions 202.

According to yet another characteristic, the header may be selected to obtain 2 and 1 LED elements.

The frustoconical annular lenses, with the head 105 of the light source 5 held therein, are associated with the receptacles 102.

The embodiment of Figures 11 to 14 is a construction variant of the embodiment of the previous figures and of the single radiating element, because it does not have a covering or closing element like the closing or covering element 4 of the single radiating element.

In this case, the radiation emitted by the LED in the direction of the central axis of symmetry is attenuated by an attenuation element with a predetermined transmission coefficient which is integrated, or is or can be fixed, possibly in a detachable manner, to the annular lens 11. Particularly, in the embodiment of Figures 11 to 14, this attenuating element 21 is a disk of transparent or translucent material engaging in the central hole of the annular lens 11. The disk lies over the emitting head on the front side of the radiating element. Otherwise, the disk may have a larger diameter and overlie the front end side of the lens 11 and have a thicker portion in the central portion which is adapted for interlocking engagement in the central hole of the annular lens 11.

Nevertheless, the multiple radiating element may be similar to the single radiating element of Figure 1, in that it also has a covering or closing element 40, which covering or closing element 40 is a multiple element integrating two or more single closing or covering elements in one part.

The multiple closing or covering element preferably has a plan shape corresponding to the plan shape of the multiple reflection/scattering means 20 and is formed of single covering or closing elements whose shape and size correspond to those of the single reflection/scattering means 2 integrated in the multiple reflection/scattering means and are located in a position coincident, centered and coaxial therewith.

The multiple covering or closing element 40 has a portion 420 coincident with each of the light sources, with a predetermined transmission coefficient for attenuating the emission of said sources in the direction of the central axis of symmetry of each concave reflection/scattering surface of the single reflection/scattering means that form the multiple radiating element.

This portion 420 may also consist of a depression 320 as described in the single radiating element embodiment.

Concerning the closing and covering element 40 of the multiple radiating element, means may be provided for fixation thereof to the multiple reflection/scattering means that are formed in the same manner as those of the single radiating element, reference being made here to the description thereof.

Also, the multiple covering element 40 may be also constructed like the covering element 4 for a single radiating element, i.e. a thin plate or sheet of transparent or translucent plastic material, which is shaped by molding. Once again, the sheet or plate have such thicknesses and materials as to preferably allow vacuum and hot forming.

In Figure 3, the covering element integrates four single covering elements, whereas the multiple covering element extended to six single covering elements is indicated by dashed lines.

Still in Figure 3, the multiple covering element may have stiffening ribs, designated by numeral 41, coincident with the peripheral areas of the concave surfaces 202 of the multiple reflection/scattering means 20.

In addition to or instead of such stiffening ribs, the multiple covering element 40 may have projecting spacers 42 for spacing a translucent or transparent plate of a light panel like the one designated by numeral 14 in Figure 2.

In the example of Figure 3, the multiple covering element 40 is formed with a concavo/convex shape, i.e. as a substantially non-planar half-shell like in the example of Figure 1. This variant is applicable to the single covering element 4 of Figure 1 and vice versa.

Concerning the example of Figure 15, in a basic embodiment of the present invention a single or multiple radiating element is provided which has one radial or edge-wise light emitting source as defined in the present invention. Obviously, in this case, in order to ensure uniform intensity of the light emitted through the emitting surface 9 or the surface of a plate like the one designated by numeral 14 in Figure 2, a predetermined position has to be set between the distance of the emitting head 105 from the emitting surface 9 and the lateral distance of the individual heads 105 of two or more LEDs or light sources from each other.

Here, an optimized, though non optimal solution was found to be provided by a relative arrangement of the LEDs or light sources 5, particularly the heads thereof, considered as point light sources, and a distance of these heads from the emitting surface, that fulfill the following condition:

$$\text{Angles A} < \text{arctg (2x/D)}$$

Where:

D is the distance between the points that define the position of the emitting heads 105 of two adjacent light sources;

x is the distance of the plane containing said points that define the position of the emitting heads of the light sources from the emitting surface and particularly from the facing side of a plate that acts as an emitting surface.

Therefore, in accordance with the above, a construction may be provided for single or multiple radiating elements, with a light source supporting plate, which plate has a radial or edge-wise light emitting source at its center (as defined herein), the plate having such a size that the radius of said plate or of a circle inscribed in the plan shape of said plate or inscribing the plan shape of said plate is equal to D/2, whereas a covering surface is associated with the plate at such a distance therefrom as to fulfill the above condition.

In one embodiment, the LED supporting plate may be the heat dissipating plate 6 and/or the header 7 according to one or more of the variants proposed for one or more of the above embodiments, whereas the emitting surface may be formed as a concavo-convex dome, in which the concave side faces towards the supporting plate 6 thereby forming a closed compartment. This arrangement also provides a box-like radiating element. Once again, means may be provided for detachable or permanent fixation of the dome-shaped element to the supporting plate, which may be as described above for one or more of the previous embodiments.

It will be appreciated that multiple radiant elements may be also provided that integrate two or more single radiating elements having construction characteristics of one or more of the previous embodiments of multiple radiating elements.

Particularly, a multiple radiating element may include at least two light sources mounted to a supporting plate in a central position relative to two adjacent areas of said plate, each of which areas has such a size that the radius of said area, i.e. of a circle inscribed in the plan shape of said area or inscribing the plan shape of said area is equal to D/2.

Concerning the emitting surface, this can be associated to the plate or the plate may be equipped with spacer elements for spacing an emitting surface, or be provided in combination with a structure having such spacer elements, the distance of the emitting surface being equal to a distance x that fulfills the above condition.

Finally, the embodiment of Figure 15 allows a very simple construction of the light panels with a minimized number of parts. Particularly, in a panel as shown in Figures 2 and/or 5, the heat dissipation plate may be omitted and the LEDs 5 may be mounted to headers 7 similar to those of the example of Figure 13B, which headers 7 are directly fixed to the bottom of the tray 12, whereas the tray is equipped with spacer elements on which the transparent or translucent plate 14 is designed to rest, which are in such position as to provide a distance x from the plane containing the points that define the light radiation source positions of the light sources.

A number of variant embodiments may be obviously provided, concerning the construction of the headers and/or the LED supporting plate.

Therefore, a panel as disclosed above has a support element for one or more plates, each carrying one or more LEDs in mutually offset positions, and with the emitting heads contained in a common plane and a transparent or translucent plate, which is provided at a predetermined distance from said emitting head containing plane, the distance D between the emitting heads and the distance x of the emitting heads from the transparent or translucent plate being determined by the following condition:

$$\text{Angles A} < \text{arctg (2x/D)}.$$

Finally, concerning the radiating element of Figure 15, lenses like those of Figures 9 or 10 and/or attenuation elements like those 21 of Figs. 11 and 14 and/or like those designated by numerals 402, 302 in Figure 1 may be also associated with the head of the light sources 5.

Figure 16 shows an exemplary light panel in which the radiating element is composed of a plurality of elements, each having a different number of square base radiating elements. Figure 16 shows one of the many possible examples and is only intended for illustration purposes. This example provides a combination of radiating elements integrating six, three, two and one base radiating elements respectively. The separation of the various multiple radiating elements is graphically indicated by a spacing, whereas each multiple radiating element is shown as comprising the corresponding amount of base radiating elements in direct contact with each other. The figure also shows the peripheral edge of the base casing which is part of the panel frame and receives these radiating elements.

## Claims

1. A radiating element for light panels, which radiating element is in tessera or tile form, with one of its faces, of larger size, forming the light radiation-emitting surface, which light radiation is emitted with an approximately even and constant distribution over said emitting surface, whereas said radiating element comprises a light source for sideward light generation, relative to the direction perpendicular or approximately perpendicular to the emitting surface, and with a 360° angular range about said source and the central axis perpendicular to the emitting surface as well as with a predetermined opening angle for emission of a peak radiation intensity, particularly a so-called radial emission generated, for example, by a so-called radial LED, which light source is held within the tessera or tile in a median position relative to the light radiation emission surface and in an intermediate position relative to the tessera or tile element and which tessera or tile element has reflection/scattering means for reflection/scattering the radial light radiation in a direction incident upon the emission surface,
**characterized in that**
the reflection/scattering means form the tessera or tile element and are formed of a half-shell shaped plate with a polygonal or round plan shape and with a concave reflection/scattering side facing towards the emitting surface and a convex side opposite said emitting surface, the central area of the shell having an opening for receiving the light source which has the radiating head within the depression of the concave side and at a focal point of said concave surface, so that the light radiation emitted from the emitting head of the light source in the sideward, i.e. radial direction, relative to the central axis of symmetry of the reflection/scattering means, is reflected/scattered in a predetermined percentage in a direction incident upon an emitting surface oriented along a plane transverse, preferably perpendicular to the central axis of symmetry of the reflection/scattering means.

2. A radiating element as claimed in claim 1, **characterized in that** the convex surface is of reflective, mirror-like type or of scattering, i.e. white color type.

3. A radiating element as claimed in claim 1 or 2, **characterized in that** the half-shell element that forms the tile or tessera has any plan shape, e.g. a square, triangular or circular shape or other regular or irregular polygonal shapes.

4. An element as claimed in one or more of the preceding claims, **characterized in that** the front concave surface facing towards the emitting side of the half-shell plate and/or the rear convex surface have a paraboloidal curvature.

5. An element as claimed in one or more of the preceding claims, **characterized in that** the light source is a radial or edge-wise light emitting LED with 360° light pattern.

6. An element as claimed in one or more of the preceding claims, **characterized in that** the concave side of the half-shell reflection/scattering means is closed by a transparent or translucent element with coupling means for connecting the peripheral edge of said closing element to the peripheral edge of the reflection/scattering means.

7. An element as claimed in claim 6, **characterized in that** the transparent closing element has the same plan shape as the reflection/scattering means and is at least approximately congruent with the plan shape of these means.

8. An element as claimed in claim 6 or 7, **characterized in that** said mutual peripheral fastening means, with either continuous or discontinuous extensions, are coupling means engaging with complementarily shaped end portions of the peripheral edge of both the reflection/scattering means and the closing element.

9. An element as claimed in claim 8, **characterized in that** said mutual peripheral fastening means include clips or the like that engage with folded peripheral edges or peripheral edge segments that form peripheral coupling grooves along the peripheral edges of the reflection/scattering means and the closing element and are open at respective opposed sides.

10. An element as claimed in one or more of the preceding claims, **characterized in that** the covering element has a surface area with lower transmission coefficient, i.e. lower transparence, in a central portion coincident or coaxial with the light source head, as compared with the remaining peripheral portion, which surface area attenuates the intensity of the light radiation emitted at the light source head, at least approximately to the same level as the intensity of the light radiation emitted through the surface area of the transparent closing element with higher transmission coefficient, i.e. surrounding such central portion.

**11.** An element as claimed in claim 10, **characterized in that** said central surface portion with the lower light transmission coefficient is a depressed central portion, i.e. a central depression of the surface of the closing element and the bottom of this depression undergoes a treatment for reducing the transmission coefficient.

**12.** An element as claimed in one or more of the preceding claims, **characterized in that** the plate or sheet that forms the reflection/scattering means and/or the plate or sheet that forms the closing element are made of a plastic material, preferably a heat deformable plastic material with a thickness in the range of typical thicknesses for vacuum and hot forming (i.e. thermoforming) processes.

**13.** An element as claimed in one or more of the preceding claims, **characterized in that** the light source, i.e. the radial or edge-emitting LED is directly mounted to the header of a printed circuit board, typically made of glass epoxy, which header also bears the tracks of the printed circuit board that forms the power supply circuit for said source and possibly some of the circuit components of a power supply or power regulation circuit for said source, the light source being provided on one side of said header and said header being fixed or fixable to half-shell reflection/scattering means whereas, in the mounted condition, said header extends tangent to the convex side of the reflection/scattering means in the area of the central light source receptacle and said light source projects cantilever-wise out of the concave side of the reflection/scattering means in the focus of the paraboloid.

**14.** An element as claimed in one or more of the preceding claims 1 to 12, **characterized in that** the LED is attached to a metal plate, preferably made of aluminum, allowing heat dissipation and fixation of the light-emitting radiating element to a load bearing structure, which aluminum plate is placed tangent or parallel to a position tangent to the convex side of the reflection/scattering means in the area of the central light source receptacle, and said light source projects cantilever-wise out of the concave side of the reflection/scattering means in the area of the focus of the paraboloid, whereas said reflection/scattering means are or can be attached to said metal plate.

**15.** An element as claimed in claim 14, **characterized in that** the header/s of the printed circuit board of a power supply circuit for the light source or a power regulating circuit for said light source are also mounted to said metal plate, e.g. in a slightly offset position, in the area peripherally surrounding the light source, and in which the convex side of the reflection/scattering means are spaced from said metal plate.

**16.** An element as claimed in claim 14, **characterized in that** the light source or the LED has a connection socket interposed between the support and/or heat dissipation plate and a header for the power supply and/or power regulation circuits, the header being provided on the emitting head side and the header having a through hole for allowing the emitting head to project out of the side facing towards the emitting surface of the radiating element and/or the side of the concave surface of the reflection/scattering means.

**17.** An element as claimed in one or more of the preceding claims, **characterized in that** the support and/or heat dissipation plate is substantially coaxial or concentric with the plan shape of the reflection/scattering means and does not project out of the peripheral sides of said means.

**18.** An element as claimed in one or more of the preceding claims, **characterized in that** the size of the radiation element depends on the type of light source, particularly LED, being used and on the light intensity to be obtained through the emitting surface, with the side or diameter ranging from 5 cm to 30 cm.

**19.** An element as claimed in one or more of the preceding claims, **characterized in that** the reflection/scattering means are formed of a thin metal sheet, such as aluminum sheet or the like, one of whose sides, i.e. the one designed to form the concave side, is treated to become reflective or is coated with a layer of material providing a scattering effect, e.g. with white paint, and which sheet is shaped by molding.

**20.** An element as claimed in one or more of the preceding claims, **characterized in that** two or more radiating elements are integrated in one element, the half-shell reflection/scattering means for two or more light sources being formed as claimed in one or more of the preceding claims 1 to 19 from a single sheet of material that is shaped to form two or more half-shells in side-by-side relationship on one or more sides.

**21.** A radiating element as claimed in claim 20, **characterized in that** it has a corresponding multiple closing element composed of an array of side-by-side single closing elements, each having a central portion with a lower light transmission coefficient, coincident with the light source of the corresponding reflection/scattering means of the array of said means in the multiple radiating element, and which multiple closing element is formed as claimed in one or more of the preceding claims 1 to 19.

**22.** An element as claimed in claim 20 or 21, **characterized in that** means are provided for fixing the multiple covering element to the corresponding array of reflection/scattering means, which are substantially identical to those of the single radiating element, and are located at least along the coincident peripheral edges of the multiple closing element and said array of reflection/scattering means and as claimed in one or more of claims 1 to 19.

**23.** An element as claimed in one or more of the preceding claims 20 to 22, **characterized in that** all or some of the light sources are mounted to a common metal support plate or the like and/or to a common header to be in turn mounted to a common support plate, each source being provided on the header and/or on the support plate in a position coincident with the receptacle of the corresponding reflection/scattering means.

**24.** A radiating element as claimed in one or more of claims 20 to 23, **characterized in that** the transparent covering element may have stiffening ribs arranged in a predetermined pattern over the surface of said covering element.

**25.** A radiating element as claimed in one or more of claims 20 to 24, **characterized in that** the multiple covering element has a plurality of projecting spacers for a transparent or translucent plate of a light panel, which is illuminated by a multiple radiating element of the above type, said projections being other than the ribs or at least partly formed of said stiffening ribs.

**26.** An array of single or multiple radiating elements, **characterized in that** said radiating element can be combined together to cover various shapes and sizes of the surfaces to be illuminated, and which array of radiating elements comprises one or more single radiating elements, one or more double radiating elements, one or more triple radiating elements, one or more quadruple radiating elements and one or more sextuple radiating elements.

**27.** An array of radiating elements as claimed in claim 26, **characterized in that** it comprises single radiating elements of one plan shape, the multiple radiating elements being composed of two or more single radiating elements of one plan shape.

**28.** An array of radiating elements as claimed in claim 26, **characterized in that** it comprises single radiating elements of two or more different plan shapes and multiple radiating elements composed of single radiating elements of one plan shape or two or more different plan shapes, said single or multiple radiating elements of different plan shapes being conformed and sized in view of being combined together.

**29.** An element as claimed in one or more of the preceding claims, **characterized in that** each light source is associated to an annular lens surrounding the emitting head of the light source.

**30.** An element as claimed in claim 29, **characterized in that** the annular lens has either a rectangular or square cross section or a right trapezoidal cross section, i.e. a general frustoconical shape, with the inclined sides converging in the light-emitting direction.

**31.** An element as claimed in claim 29 or 30, **characterized in that** an element is associated with the head side of the annular lens, for attenuating the light emission from the emitting head in the direction of the axis of said annular lens, which attenuating element has a predetermined transmission coefficient.

**32.** An element as claimed in claim 31, **characterized in that** the attenuating element is a disk that is designed to be fitted in interlocking engagement in the central hole of the annular lens above the emitting head of the light source, which disk can have radial widening portion overlying the end side of the lens facing towards the emitting surface.

**33.** An element as claimed in one or more of the preceding claims, **characterized in that** the reflection/scattering means is omitted at each light source, the light source being located at the center of a radiating element having a predetermined plan shape and the radius of the circle inscribing said plan shape or the radius of the circle inscribed in said plan shape and the distance of the emitting surface from the emitting head of the light source fulfill the following condition:

$$\texttt{Angles A < arctg (2x/D)}$$

Where:

D/2 is the radius of the circle inscribed or inscribing the plan shape;
x is the distance of the plane containing said points that define the position of the emitting heads of the light sources from the emitting surface and particularly from the facing side of a plate that acts as an emitting surface.

**34.** A radiating element as claimed in claim 33, **characterized in that** it is a multiple radiating element and includes at least two light sources mounted to a common supporting plate in a central position relative to one of at least two adjacent areas of said plate, each of which areas is associated with one of the at least two light sources and has such a size that the radius of said area, i.e. of a circle inscribed in the plan shape of said area or inscribing the plan shape of said area is equal to D/2.

35. An element as claimed in claim 33 or 34, **characterized in that** the LED supporting plate is the heat dissipating plate and/or the header of at least part of a power supply circuit, whereas the emitting surface is formed as a concavo-convex dome, wherein the concave side faces towards the supporting plate or the header thereby forming a closed compartment and providing a box-like radiating element.

36. An element as claimed in one or more of claims 33 to 35, **characterized in that** the emitting surface is associated to the support plate or the plate is equipped with spacer elements for spacing said emitting surface, or is provided in combination with a structure having said spacer elements, the distance of the emitting surface being equal to a distance x that fulfills the condition as claimed in claim 33.

37. A light panel having at least one bearing frame for supporting a plurality of light emitting means mounted to the back of at least one translucent or transparent plate, which bears or supports graphical information formed by a combination of transparent and/or translucent surfaces having different colors and/or light transmission coefficients, **characterized in that** it includes, as light emitting means, one or more single or multiple radiating elements as claimed in one or more of the preceding claims 1 to 36.

38. A radiating panel as claimed in claim 37, **characterized in that** it has a support element for one or more light sources or one or more plates, each carrying one or more light sources in mutually offset positions, and with the emitting heads contained in a common plane and a transparent or translucent plate, which is provided at a predetermined distance from said emitting head containing plane, the distance D between the emitting heads and the distance x of the emitting heads from the transparent or translucent plate being determined by the following condition:

**Angles A < arctg (2x/D).**

39. An element as claimed in one or more of claims 29, 30, 31, 32, **characterized in that** the annular lens (10) is provided as a separate construction part to be detachably fixed around the radiating head (105) of the light source (5), the surface of said lens facing opposite the direction of light radiation and/or propagation being reflective and/or white on the side of said surface facing towards the inside of said lens.

40. An element as claimed in claim 39, **characterized in that** a layer of white material is coated on said side of the annular lens (10).

Fig. 1

220V
AC

24V
DC

18

17

16

13

13

6

112

212

16

14

1

115

15

215

12

Fig. 2

Fig. 3

Fig. 4A

Fig. 4B

Fig. 4C

Fig. 4D

Fig. 5

Fig. 6A

Fig. 6B

9

202

Fig. 7

2

5

no lens

202   10   9

2

5

frustoconical lens

Fig. 8

9

202

11

2

5

with square lens

Fig. 9

Fig. 15

Angles A < arctg (2x/D) will be deflected towards the plate

Fig. 10

Fig. 11

Fig. 12

EP 2 020 566 A2

11

202

Fig. 13B

20

11

21

20

102

7

5

6

Fig. 13A

23

102   11   21   105   11   202

B (3:1)

**Fig. 14**

5   6   205

1

12

1   1

**Fig. 16**